# EUROPEAN PATENT APPLICATION

(11) **EP 2 752 804 A1**
(43) Date of publication of application: **09.07.2014**
(21) Application number: 13198974.1
(22) Date of filing: 20.12.2013
(51) Int. Cl.: G06Q 30/06

(54) **Method and system for optimizing size consultation upon the ordering of trousers**

(30) Priority: 20.12.2012 BE 201200867
(71) Applicant: De Nijs, Dirk, 1750 Lennik (BE)
(72) Inventor: De Nijs, Dirk, 1750 Lennik (BE)
(74) Representative: Brantsandpatents bvba

(57) **Abstract**

The present invention relates to a method for optimizing the size consultation on the purchase of trousers via a webshop, and a pair of trousers traded according to this method.

In a second aspect, the present invention also comprises a system for optimizing the size consultation on the purchase of trousers.

## Description

### TECHNICAL FIELD

The invention relates to a method and system for optimizing size consultation on the order and purchase of trousers at a distance, for example via the Internet. The method and system related to this method provide the customer the guarantee of an optimal fit of the purchased items.

### STATE OF THE ART

With the exponential growth of webshops and web applications which offer clothing, more and more clothing is purchased over the Internet. The disadvantage herein is that the clothing cannot be tried on as in a traditional store and thus, the customer has an uncertainty factor each time when he is ordering products. Most webshops and applications try to solve this by giving standard information concerning the sizes or by providing services whereby a customer can return the purchased goods for free if they do not meet the expectations.

However, even with these services, plenty of purchased goods are still being returned. Especially when purchasing trousers, and in particular jeans, this appears to be a major problem, and the return of goods is high. A good fit of this clothing is much more subjected to the exact body measurements and body type of the customer than is the case for other clothing.

U.S. 2002 013 817 0 discloses a system for simplifying clothing purchases via the Internet, based on a comparison of the body dimensions of the customer and the dimensions of the clothing. However, U.S. 2002 013 817 0 fails to provide a specific solution for purchasing trousers from a distance.

The present invention aims at providing a sophisticated method and system which enable customers to purchase trousers over the Internet with confidence, whereby the fit of the purchased items is guaranteed. Furthermore, the method and system of the present invention are independent of the various prevailing trouser sizes (among others American, German, French, English, etc.). This also applies that the customer cannot make a mistake in the different size types and each time will be provided with the right fit. Furthermore, by means of this invention, the return of unwanted items will be minimized, as a result of which the seller can be certain of his turnover and sales.

### SUMMARY OF THE INVENTION

The invention relates to a method for optimizing the size consultation on the purchase via a webshop according to claim 1.

In particular, the present invention comprises a method based on 7 sophisticated criteria which ensure the customer that a fitting trousers is recommended. The criteria are independent of the several internationally prevailing sizes.

In a second aspect, the invention relates to a system for optimizing the size consultation on the purchase of trousers according to claim 16. The system ensures a fully automatic recommendation of the appropriate trousers and also allows the customer to save his data, preferences and purchases.

In a final aspect, the present invention also relates to a pair of trousers traded according to the described method.

### DESCRIPTION OF THE FIGURES

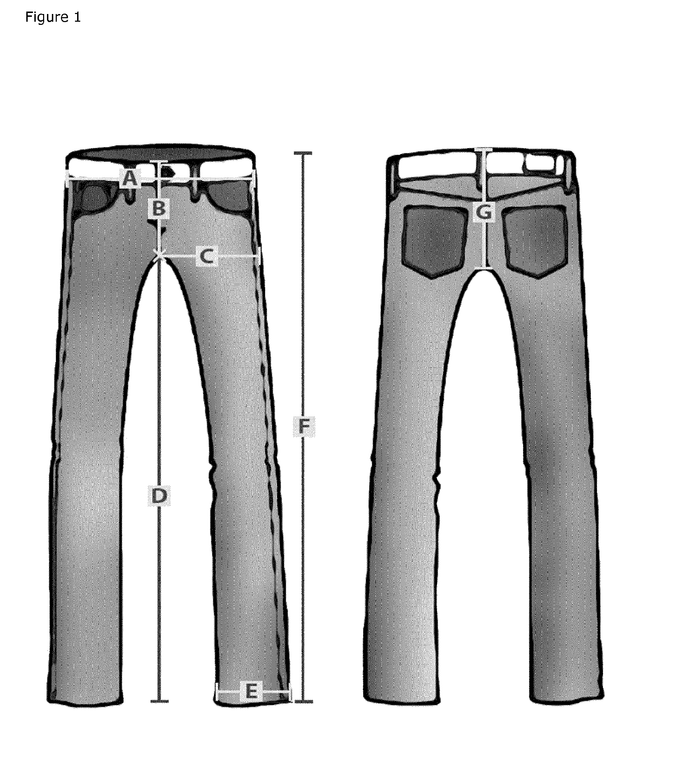

**Figure 1** shows the seven preferred criteria A to G, used to optimize the size consultation on the purchase of trousers, according to the present invention.

### DETAILLED DESCRIPTION

Unless otherwise defined, all terms used in the description of the invention, including technical and scientific terms, have the meaning as commonly understood by a person of experience in the field of the invention. For a better assessment of the description of the invention, the following terms are explained explicitly.

"A", "an" and "the" in this document refer to both the singular and the plural, unless the context clearly implies otherwise. For example, "a segment" means one or more than one segment.

Where "about" or "around" are used in this document with a measurable variable, a parameter, a time period or a moment in time, and the like, this implies variations of +/-20% or less, preferably +/-10% or less, more preferably +/-5% or less, even more preferably +/-1% or less, and most preferably +/-0.1 % or less than one of the cited values, to the extent that such variations apply to the described invention. It should, however, be noted that the value of the quantity in which the term "about" or "around" is used, is specifically disclosed.

The terms "comprise", "comprising", "consist of", "consisting of", "provided with", "include", "including", "contain", "containing", "imply", "implying" are synonyms and are inclusive or open terms that indicate the presence of what follows and which do not preclude the presence or prevention of other components, features, elements, members, steps, as known from and described in the prior art.

The quoting of numerical intervals by the endpoints comprises all integers, fractions, and/or real numbers between the endpoints, with these endpoints being included.

In a first aspect, the invention relates to a method for optimizing the size consultation on the purchase of trousers via a webshop.

In an embodiment, the method comprises at least the following steps:
- providing a login page for a customer;
- inquiring sizes of a customer;
- comparing of said sizes with a data collection concerning a collection of trousers offered; and
- recommending of one or more trousers to the customer based on this comparison.

In a preferred embodiment of the present invention, the requested sizes comprise the sizes as represented in figure 1.

In particular, the requested size measurements comprise:
- the waist (A)
- the front rise (B)
- the thigh (C)
- the inseam (D)
- the bottom hem (E)
- the outseam (F)
- the back rise (G)

It was specifically found by the inventors of the present invention that a comparative algorithm on the basis of these 7 criteria guarantees an optimal fit of trousers, more preferably jeans.

These sizes are preferably determined by the customer himself by the conventional measuring (e.g. by means of a tape measure) of a pair of trousers of the customer. Preferably, this relates to a pair of trousers that provides the customer a good fit, and thus the resulting dimensions/sizes will serve as the basis for the recommendation of other trousers, with similar fit. In particular, an accompanying figure (for example, similar to figure 1) and text can be provided which guide the customer in the measurement of the 7 requested sizes.

Preferably, the requested sizes are delivered in an appropriate measure of length, as there are centimeters, millimeters or inches.

A customer interested in purchasing clothing, especially a pair of trousers, via the webshop of the present invention can log in. For this purpose, a secure platform is provided. When it is the first time the customer logs in, he is offered the opportunity to create a personalized profile. Initially, this profile will include the identification data of the customer, such as for example name, address, age, gender, family status, etc.

In a second step, the customer will be asked to indicate his sizes, based on a well-fitting trousers which he already owns. These sizes are linked to the profile and saved in the system so that they can be retrieved at every purchase.

In addition, the customer can also indicate some preferences with respect to the desired items, which may vary per purchase. Examples of such preferences relate to, for instance, the desired color of the trousers, the desired material (e.g. jeans, cotton, corduroy, etc.), the desired brand, the desired fit (skinny, bootcut, flare, straight, etc.), the desired model (women's, men's or children's model). Additionally, the customer can save data relating to a third party for which a purchase has to be done (e.g. spouse, children, etc.). The method according to the present invention allows a customer to save under one profile multiple groups of data, each individually linked to a person, the specific sizes and preferences.

Subsequently, the method according to the present invention comprises a comparative step, whereby the information extracted from the customer's profile (the sizes, or a combination of sizes and preferences) are compared linked to a collection of data concerning the trousers offered.

This data collection comprises size measurements relating to the waist (A), the front rise (B), the thigh (C), the inseam (D), the bottom hem (E), the outseam (F) and the back rise (G) of each pair of trousers offered in the webshop.

Preferably, these sizes are measured manually per trousers offered and each size parameter is saved in the data collection. Consequently, by means of the method of the present invention, all known international size types (German, French, British, American, etc.) are converted to one single size type, expressed in conventional units of length (cm, inch,...) on the basis of the 7 size measurements determined according to the present invention. Thus, a customer no longer has to take into account all these different size types when purchasing a pair of trousers. Moreover, the method according to the present system allows finding a suitable fit independent of the size types of the trousers, but on the basis of a comparative algorithm between the ideal desired sizes and these of all the trousers offered.

The method also comprises a step whereby the customer is instructed concerning the measurement consultation. These instructions may include, among others, written indications, pictures and/or video material.

Furthermore, this data collection also comprises, preferably, at least the size, color, material type, fit and brand of each pair of trousers, as well as the availability of each size/specific pair of trousers in stock.
As mentioned, the customer will be recommended one or more trousers based on the comparison of the individual size measurements with the data collection (related to the trousers offered in stock).
More specifically, the method according to the present invention, provides an algorithm, that will compare the 7 size measurements related to the customer pairwise to the corresponding size of each pair of trousers from the data collection. Preferably, a pair of trousers that is no longer in stock, will not be included in the algorithm.
In particular, one or more trousers will be recommended on the basis of the comparison of the customer's preferences with the data collection. Because of the pairwise comparison of the ideal fits with those of the data collection related to the trousers in stock, a ranking is drawn up, whereby the first results from the ranking correspond to the best fit for the customer. In the particular case wherein the customer has also indicated preferences concerning color, material, model, the first results from the ranking will also take into account these preferences. Preferably, a pair of trousers with optimal fit for the customer will be a pair of trousers of which the 7 size measurements correspond to those indicated by the customer. If none of the trousers from the data collection exactly meet the specified 7 size measurements, then the next pair of trousers with the best match will be indicated as the best fitting size. Preferably, a pair of trousers from the offered collection will differ from the desired size measurements with a maximum of 2 size measurements. If the difference is more than 2, then the pair of trousers will not be included in the ranking, as it will be considered as not fitting.
In the situation wherein one of the requested size measurements is missing or incomplete, the best fitting fit will be determined on the basis of the available size measurements. If the missing size is crucial for determining the ranking, or too much size measurements are lacking in order to obtain a correct comparison, an error message will be generated.
Preferably, the customer will receive a visual presentation of the recommended trousers, preferably with pricing, and he will also have the opportunity to purchase it. Purchase can be executed easily via a one-click system whereby clicking on a corresponding icon that is individually linked to an item leads to the addition of this item to a shopping cart, and after payment of the demanded price and possible shipping costs, can be considered as purchased. Preferably, the purchased trousers are saved in the customer's profile.
In particular, the trousers are presented to the customer in a ranking, whereby the pair of trousers with the most optimal fit (and which also meets the customer's preferences) will be displayed first, followed by the next trousers in the ranking.
In a second aspect, the present invention comprises a system for optimizing the size consultation on the purchase of trousers. In particular, one such system will comprise the following components:
- at least one storage facility for saving a data collection concerning a collection of trousers offered;
- at least one processor, programmed to recommend to a customer one or more trousers by means of comparing the data collection saved in the storage facility with the customer's size measurements, and
- a facility for visualizing the recommendations to the customer.
More particularly, the data collection will comprise at least the data concerning the waist (A), the front rise (B), the thigh (C), the inseam (D), the bottom hem (E), the outseam (F) and the back rise (G) of each pair of trousers offered.
Also preferably, the system will comprise at least one processor which is programmed to allow a customer to create a profile, comprising at least the customer's identification data and size measurements, and whereby at least one storage facility saves the profile.
In particular, the system comprises a webshop and/or a webshop application. More particularly, the system will be able to carry out the method according to the present invention.
In a final aspect, the present invention comprises a pair of trousers traded according to the method or by means of the system of the present invention. In particular, the pair of trousers will meet at least 5 of the size measurements indicated by a customer, whereby the size measurements are selected from the group of the waist (A), the front rise (B), the thigh (C), the inseam (D), the bottom hem (E), the outseam (F) and the back rise (G). Preferably, the pair of trousers meets 6 of 7 specified size measurements, more preferably, all of the specified size measurements.
In a more preferred embodiment, the pair of trousers will, apart from meeting at least 5 of the 7 specified size measurements, also meet the indicated customer's preferences (e.g. in terms of color, material type, etc.).

## Claims

1. A method for optimizing the size consultation on the purchase of trousers via a webshop, comprising the following steps:
- providing a login page for a customer;
- inquiring sizes of a customer;
- comparing of said sizes with a data collection concerning a collection of trousers offered;
- recommending of one or more trousers to the customer based on this comparison,
**characterized in that** the requested size measurements comprise the waist (A), the front rise (B), the thigh (C), the inseam (D), the bottom hem (E), the outseam (F) and the back rise (G) of a pair of trousers.

2. Method according to claim 1, **characterized in that** the data collection at least relates to size measurements concerning the waist (A), the front rise (B), the thigh (C), the inseam (D), the bottom hem (E), the outseam (F) and the back rise (G) of each pair of trousers offered.

3. Method according to claim 1 or 2, further comprising instructing the customer regarding the size consultation.

4. Method according to any of the claims 1 to 3, **characterized in that** the collection of known size measurements are being measured manually and saved in the data collection.

5. Method according to any of the claims 1 to 4, **characterized in that** the data collection further comprises at least the size, color, fit and brand of each pair of trousers.

6. Method according to any of the claims 1 to 5, further comprising inquiring the customer's preferences, whereby said preferences comprise at least the desired color of the pair of trousers, the desired fit and desired brand.

7. Method according to any of the claims 1 to 6, **characterized in that** a personal profile for the customer is created.

8. Method according to claim 7, **characterized in that** the profile contains at least the customer's identification data.

9. Method according to any of the claims 7 or 8, **characterized in that** the profile comprises the customer's size measurements.

10. Method according to claim 9, **characterized in that** the profile comprises the customer's preferences.

11. Method according to any of the claims 1 to 10, **characterized in that** one or more trousers are recommended on the basis of the comparison of the size measurements with the data collection.

12. Method according to claim 11, **characterized in that** one or more trousers are recommended on the basis of the comparison of the customer's preferences with the data collection.

13. Method according to any of the claims 1 to 12, **characterized in that** the customer receives a visual presentation of the recommended trousers and is able to purchase them.

14. Method according to claim 13, **characterized in that** the purchased trousers are saved in the customer's profile.

15. System for optimizing the size consultation on the purchase of trousers, comprising
- at least one storage facility for saving a data collection concerning a collection of trousers offered;
- at least one processor, programmed to recommend one or more of trousers to a customer by means of comparing the data collection saved in the storage facility with the customer's size measurements; and
- a facility for visualizing the recommendations to the client
**characterized in that** the data collection comprises at least data concerning the waist (A), the front rise (B), the thigh (C), the inseam (D), the bottom hem (E), the outseam (F) and the back rise (G) of each pair of trousers offered.

16. System according to claim 15, **characterized in that** at least one processor is programmed to allow a customer to create a profile, at least comprising the identification data and size measurements of the customer, and whereby at least one storage facility will save the profile.

17. System according to any of the claims 15 or 16, **characterized in that** the system comprises a webshop or webshop application.

18. Pair of trousers traded according to the method of any of the claims 1 to 14 or by means of the system according to claims 15 to 17, **characterized in that** the pair of trousers meets at least 5 of the size measurements indicated by the customer, whereby the size measurements are selected from the group of the waist (A), the front rise (B), the thigh (C), the inseam (D), the bottom hem (E), the outseam (F) and the back rise (G).
